# EUROPEAN PATENT SPECIFICATION

(11) **EP 4 283 756 B1**
(45) Date of publication and mention of the grant of the patent: **15.07.2026**
(21) Application number: 22742628.5
(22) Date of filing: 20.01.2022
(51) Int. Cl.: H01M 10/48, H01M 10/613, H01M 10/643, H01M 10/658, H01M 50/20, H01M 50/289, H01M 50/213

(54) **BATTERY PACK**
BATTERIEPACK
BLOC-BATTERIE

(30) Priority: 22.01.2021 JP 2021008809
(43) Date of publication of application: 29.11.2023
(73) Proprietor: Panasonic Energy Co., Ltd., Osaka 570-8511 (JP)
(72) Inventor: TADA, Manabu, Kadoma-shi, Osaka 571-0057 (JP); ONO, Michinobu, Kadoma-shi, Osaka 571-0057 (JP); TAKATSUJI, Yuki, Kadoma-shi, Osaka 571-0057 (JP); TSUJIGUCHI, Ryusuke, Kadoma-shi, Osaka 571-0057 (JP)
(74) Representative: Novagraaf International SA
(86) International application number: PCT/JP2022/001890
(87) International publication number: WO 2022/158506

(56) References cited:
- CN-A- 102 187 493
- JP-A- 2008 192 570
- JP-A- 2010 114 077
- JP-A- 2012 164 463
- JP-A- 2019 089 257
- JP-A- 2019 147 357
- JP-A- 2020 165 483
- JP-A- 2020 532 078
- KR-A- 20100 029 826
- US-A1- 2020 220 238
- US-A1- 2020 358 063

## Description

### Technical Field

The present invention relates to a battery pack including battery cells housed in an exterior case.

### Background Art

A battery pack including battery cells housed in an exterior case is used as a power source for electric devices. In this battery pack, the battery cells are connected in series or parallel to increase a capacity of the battery pack. Particularly in recent years, an increase in the capacity of the battery pack has been demanded, while an increase in the capacity of each battery cell has been promoted. Furthermore, the battery cells are required to be disposed to be close to each other without gaps therebetween inside the battery pack.

On the other hand, the possibility of thermal runaway of the battery cell caused for various reasons, such as an internal short circuit and overcharge, is hardly eliminated. In a battery pack including battery cells disposed close to each other, when any one of the battery cells abnormally generates heat and causes thermal runaway, the risk of a blowout of exhaust gases having a large heat energy and a high temperature is incurred. When the exhaust gases blown out from the battery cell having caused the thermal runaway heats an adjacent battery cell and induces thermal runaway, exhaust gases having a still larger heat energy is discharged to cause a decrease in safety. To prevent this harmful effect, the battery pack preferably has a configuration in which, even when any one of the battery cells causes thermal runaway, this thermal runaway does not induce thermal runaway of an adjacent battery cell.

To prevent the above-described harmful effect, a battery pack in which a mica plate is disposed between adjacent battery cells has been developed (see PTL 1 and PTL 2). PTL3 and PTL 6 each discloses a battery pack. PTL 4 discloses a battery pack containing a plurality of batteries. PTL 5 discloses a fireproof battery module and a fireproof layer thereof. PTL 7 discloses a battery pack and battery-mounted device.

### Citation List

PTL 1: Japanese Patent Laid-Open Publication No. 2012-33464
PTL 2: WO 2019/150772
PTL 3: US 2020/358063 A1
PTL 4: CN 102 187 493 A
PTL 5: US 2020/220238 A1
PTL 6: JP 2008-192570 A
PTL 7: KR 2010-0029826 A

### SUMMARY

### Technical Problem

Battery packs described in PTLs 1 and 2 each include mica plates each being in close contact with a surface of a cylindrical battery cell and curved along the surface. In the battery pack described in PTL 1, each of the mica plates is disposed to be curved along the surface of a corresponding one of cylindrical adjacent battery cells, and furthermore, a heat resistant plastic wall is disposed between the mica plates to prevent the induction of thermal runaway. In the battery pack described in PTL 2, each of mica plates is disposed to be curved along the surface of a corresponding one of the cylindrical adjacent battery cells, and furthermore, between the mica plates facing each other, another a flat mica plate is disposed to prevent the induction of thermal runaway. These battery packs have a problem in that, not only the mica plates in two layers arranged between the cylindrical adjacent battery cells are provided, but also the heat resistant plastic or mica wall is provided between the two mica plates, which causes a more complicated structure and a higher manufacturing cost.

The present invention was developed to solve the above-mentioned problem, and an object of the present invention is to provide a battery pack preventing the induction of thermal runaway while reducing a manufacturing cost.

### Solution to Problem

The invention is as set out in the independent claims, further aspects of the invention are outlined in the dependent claims. Embodiments that do not fall within the scope of the claims do not describe part of the invention. In a battery pack according to one aspect of the present invention, rechargeable battery cells having cylindrical shapes are arranged in parallel to each other. A heat resistant wall is disposed between the battery cells. An exterior case houses the battery cells and the heat resistant wall therein. The heat resistant wall has heat insulating recesses provided in surfaces of the heat resistant wall. Each of the surfaces of the heat resistant wall faces a surface of a corresponding one of the battery cells and has a corresponding one of the heat resistant recesses therein. The corresponding one of the heat insulating recesses forms an air layer having a length (L) in a longitudinal direction of the corresponding one of the battery cells and a width (W) in a circumferential direction of the corresponding one of the battery cells. According to the claimed invention, the heat resistant wall has a plurality of outer grooves therein on both sides of the corresponding one of the heat insulating recesses, the plurality of outer grooves have openings disposed on the surface of the corresponding one of the battery cells.

### Advantageous Effects of Invention

The battery pack of the present invention has an advantage that a heat-resistant wall having a heat insulating recess therein is disposed between the battery cells disposed in parallel to each other. The heat insulating recess constitutes an air layer in a surface of heat-resistant wall facing the surface of each of the battery cells, and thus, heat transfer between the adjacent battery cells is effectively reduced and the induction of thermal runaway is substantially prevented. In particular, with a simple structure in which the heat-resistant wall is disposed between the battery cells arranged in parallel to each other, the above-described battery pack effectively prevents the induction of thermal runaway while reducing a manufacturing cost.

### BRIEF DESCRIPTION OF THE DRAWINGS

FIG. 1 is a perspective view of a battery pack according to Exemplary Embodiment 1 of the present invention.
FIG. 2 is a cross-sectional view of the battery pack along line II-II illustrated in FIG. 1.
FIG. 3 is an exploded perspective view of the battery pack illustrated in FIG. 1.
FIG. 4 is an exploded perspective view of the battery pack illustrated in FIG. 1 viewed from the bottom of the battery pack.
FIG. 5 is an enlarged cross-sectional view of the battery pack illustrated in FIG. 2.
FIG. 6 is a bottom view of a core pack of the battery illustrated in FIG. 4.
FIG. 7 is a schematic perspective view illustrating a state in which exhaust flames from a side surface of a battery cell are discharged to the outside via a heat insulating recess of a heat resistant wall.
FIG. 8 is a schematic perspective view illustrating a state in which exhaust flames from the side surface of the battery cell are discharged to the outside by an inner groove of the heat resistant wall.
FIG. 9 is an exploded perspective view of the heat resistant wall.

### DETAILED DESCRIPTIONS

A battery pack according to one embodiment of the present invention includes: rechargeable battery cells having cylindrical shapes and arranged in parallel to each other; a heat resistant wall disposed between the battery cells; and an exterior case housing the battery cells and the heat resistant wall therein. The heat resistant wall has heat insulating recesses provided in surfaces of the heat resistant wall. Each of the surfaces of the heat resistant wall faces a surface of a corresponding one of the battery cells and having a corresponding one of the heat resistant recesses therein. The corresponding one of the heat insulating recesses forms an air layer having a length (L) in a longitudinal direction of the corresponding one of the battery cells and a width (W) in a circumferential direction of the corresponding one of the battery cells.

In the battery pack according to another embodiment of the present invention, the corresponding one of the heat insulating recesses with the length (L) extends across both ends of the corresponding one of the battery cells and is open at the both ends of the corresponding one of the battery cells.

The above-described battery pack allows high-temperature exhaust gas discharged from the battery cell to the air layer to flow from the surface of the battery cell to the outside via the heat insulating recess and thereby preventing a heat obstacle due to the exhaust gas. The high-temperature exhaust gas staying in the air layer between the battery cell and the heat-resistant wall may cause a heat damage to the heat resistant wall and the damage to the heat resistant wall causes the induction of thermal runaway.

In the battery pack according to still another embodiment of the present invention, the corresponding one of the heat insulating recesses with the width (W) includes a closest point at which peripheral surfaces of the battery cells are closest to each other.

In the above-described battery pack, the air layer is provided at both sides of the closest point at which the outer circumferential surfaces of the cylindrical battery cells are closest to each other. This configuration allows exhaust gas blown out from the closest point between the battery cells and both sides of the closest point to flow into the air layer to prevent the induction of thermal runaway.

In the battery pack according to still another embodiment of the present invention, the heat resistant wall includes two heat resistant plates stacked on each other at respective centers of the two heat resistant plate at which the heat insulating recesses are provided therein.

In the above-described battery pack, the heat resistant wall composed of two heat resistant plates allows the heat resistant wall having an ideal complicated cross-sectional shape to be efficiently mass-produced. This is because the heat resistant plates are formed in different shapes and stacked, providing a heat resistant wall having a complicated cross-sectional shape.

In the battery pack of the present invention, the heat resistant wall has plural outer grooves therein on both sides of the corresponding one of the heat insulating recesses. The plural outer grooves have openings disposed on the surface of the corresponding one of the battery cells.

In the above-described battery pack, the heat insulating recess is provided at the center of the heat resistant wall, and the outer grooves are provided on both sides of the heat insulating recess, whereby an air layer formed by the heat insulating recess is provided at the center of the heat resistant wall meanwhile air layers formed by the outer grooves are provided on both sides of the heat insulating recess, so that the air layers in three rows can be provided in a surface facing the surface of the battery cell. According to this configuration, the air layers in three rows bring an air layer having a large width to the cylindrically curved surface of the battery cell, and exhaust gas blown out from the battery cell flows into the air layer in a large area to prevent the induction of thermal runaway.

In the battery pack according to still another embodiment of the present invention, each of the heat resistant plates includes bent pieces bent at both edges of the heat resistant plate toward the surface of the corresponding one of the battery cells. Each of the plural outer grooves is disposed between a corresponding one of the bent pieces and the surface of the corresponding one of the battery cells.

In the above-described battery pack, the bent pieces formed by bending both edges of the heat resistant plate provide the outer grooves in two rows in the surface of the battery cell. This simple structure provides the outer grooves in two rows on both sides of the heat insulating recess in the surface of the battery cell.

In the battery pack according to still another embodiment of the present invention, the heat resistant wall has an inner groove therein disposed between edge portions of the heat resistant plates stacked on each other and between outer grooves out of the plural outer grooves provided on each side of the heat resistant wall. The inner groove has an opening closed by an inner surface of the exterior case.

In the above-described battery pack, the inner grooves are each provided in a valley-shaped region formed by disposing cylindrically curved battery cells in parallel to each other. The inner groove is also capable of, as an air layer, performing heat insulation between the adjacent battery cells.

In the battery pack according to still another embodiment of the present invention, each of the heat resistant plates includes first bent portions, second bent portions, and third bent portions. The first bent portions, the second bent portions, and the third bent portions extending in the longitudinal direction of the battery cells and being arranged from the center toward both sides in an order of the first bent portions, the second bent portions, and the third bent portions in two rows. Each of the heat resistant plates further includes: a center flat surface portion disposed at the center between the first bent portions arranged in two rows; rising portions each formed between a corresponding one of the first bent portions and a corresponding one of the second bent portions and extending from a corresponding one of edges of the center flat surface portion toward the surface of the corresponding one of the battery cells; and side flat surface portions each formed between the corresponding one of the second bent portions and a corresponding one of the third bent portions. Each of the bent pieces is formed between the corresponding one of the third bent portions and a corresponding one of edges of the heat resistant plate. Each of the heat insulating recesses is formed by the center flat surface portion and the rising portions. The inner groove is formed by a corresponding one of the side flat surface portions and a corresponding one of the rising portions. Tach of the outer grooves is formed by a corresponding one of the side flat surface portions and a corresponding one of the bent pieces.

In the above-described battery cell, an ideal heat resistant wall can be produced by bending and stacking two heat resistant plates. In particular, in the above-described battery pack, two heat resistant plates are stacked; heat insulating recesses are formed at the center on both sides of the stacked heat resistant plates, and the outer grooves are formed on both sides of each of the heat insulating recesses, and furthermore, the inner grooves are each formed between the outer grooves on both sides of the heat resistant wall. The heat insulating recesses, the outer grooves, and the inner groove as air layers provide heat insulation between the adjacent battery cells. Thus, while the heat resistant wall has an ideal shape for preventing the induction of thermal runaway, two heat resistant plates are stacked, whereby the heat resistant wall can be efficiently mass-produced with lower manufacturing costs.

In the battery pack according to still another embodiment of the present invention, the heat resistant plates are inorganic plates.

In the battery pack, the heat resistant wall is excellent in heat resistance effectively preventing heat damage to the heat resistant plate due to exhaust gas blown out from the battery cell.

In the battery pack according to still another embodiment of the present invention, the inorganic plates are formed by bending mica plates, and the mica plates are stacked and joined at the centers thereof.

The above-described battery pack has an advantage that, since the heat resistant plates are formed by bending mica plates, the heat resistant wall can have excellent heat resisting properties and furthermore, by bending and stacking the mica plates, the heat resistant wall can be ideally shaped and efficiently mass-produced.

In the battery pack according to still another embodiment of the present invention, the heat resistant wall is composed of two mica plates bent at the first bent portions, the second bent portions, and the third bent portions. The two mica plates are stacked and joined at the center flat surface portion.

In the above-described battery pack, the bent mica plates are stacked at the center to form the heat resistant wall, and therefore, in a region in which the cylindrical battery cells are closest to each other, the two mica plates excellent in heat resistance are stacked in two layers, so that more excellent heat resistance can be achieved. Furthermore, on both sides of the center, the outer grooves are formed by the bent mica plates, and therefore, in the heat resistant wall, air layers in three rows including an air layer formed by the heat insulating recess having particularly excellent heat resistance and air layers formed by the outer grooves can be disposed in a surface of the heat resistant wall, the surface facing the adjacent battery cell. The air layers in three rows are disposed in a large area of the surface facing the battery cell so that exhaust gases blown out from the battery cell are effectively guided to the air layers to prevent the induction of thermal runaway more effectively.

In the battery pack according to still another embodiment of the present invention, the width (W) of the heat insulating recess is 15% or more of the outer diameter of the battery cell.

In the battery pack according to still another embodiment of the present invention, the width (W) of the heat insulating recess is 60% or less of the outer diameter of the battery cell.

In the battery pack according to still another embodiment of the present invention, the minimum gap (d) between the heat resistant wall and the surface of the battery cell in the heat insulating recess is 5 mm or less.

The battery pack according to still another embodiment of the present invention includes a temperature sensor configured to detect a temperature of the battery cell, wherein the temperature sensor is disposed between the heat resistant wall and the surface of the battery cell.

The above-described battery pack has an advantage that the temperature sensor is disposed in the surface of the battery cell while being thermal coupled thereto, whereby the temperature of the battery cell can be quickly detected with high accuracy.

The battery pack according to another embodiment of the present invention includes a temperature sensor configured to detect a temperature of the battery cell, wherein the temperature sensor is disposed in the outer groove.

The above-described battery pack has an advantage that the temperature sensor is disposed in the outer groove provided in the heat resistant wall, and thus, while the temperature sensor is easily disposed at an ideal position, the temperature sensor can detect the temperature of the battery cell with higher accuracy.

The battery pack according to still another embodiment of the present invention includes a voltage detection line connected to an end surface electrode of the battery cell and configured to detect the voltage of the battery cell. The voltage detection line is disposed in the outer groove.

The above-described battery pack has an advantage that the voltage detection line is disposed in the outer groove provided in the heat resistant wall, and thus, while the voltage detection line is space-savingly disposed at a predetermined position, the voltage of the battery cell can be detected.

In the battery pack according to still another embodiment of the present invention, the exterior case includes a surface plate unit flush with surfaces of the battery cells arranged in parallel to one another. The surface plate unit includes a positioning rib projecting toward an inner side of the surface plate unit, and the positioning rib is guided to one of the inner grooves to position the heat resistant wall at a predetermined position of the exterior case.

The above-described battery pack has an advantage that the positioning rib provided in the surface plate unit of the exterior case is guided to the inner groove of the heat resistant wall, whereby the heat resistant wall can be positioned at the predetermined position in the exterior case.

Hereinafter, embodiments of the present invention will be described with reference to the drawings. Note that the embodiments described below are presented as examples embodying a technical idea of the present invention, and accordingly, the present invention is not limited to the followings. In addition, the present specification is not definitely presented to limit members described in the claims to corresponding members described in the embodiment. Unless otherwise specified, dimensions, materials, shapes, relative positions, and the likes of constituents described in the embodiment are only presented as explanatory examples and are not intended to limit the scope of the present invention. Note that sizes, positional relationships, and the likes of members illustrated in the drawings are sometimes exaggerated for clarifying explanations. Furthermore, identical names and reference numerals indicate the same or similar members in the following description, and detailed description thereof will be omitted as appropriate. In addition, as for constituents of the present invention, a plurality of constituents may be configured with the same member so that one member functions as a plurality of constituents, or conversely, a function of one member may be shared and implemented by a plurality of members. Furthermore, descriptions provided in some of the examples and embodiments can be applied to other examples and embodiments.

### Exemplary Embodiment 1

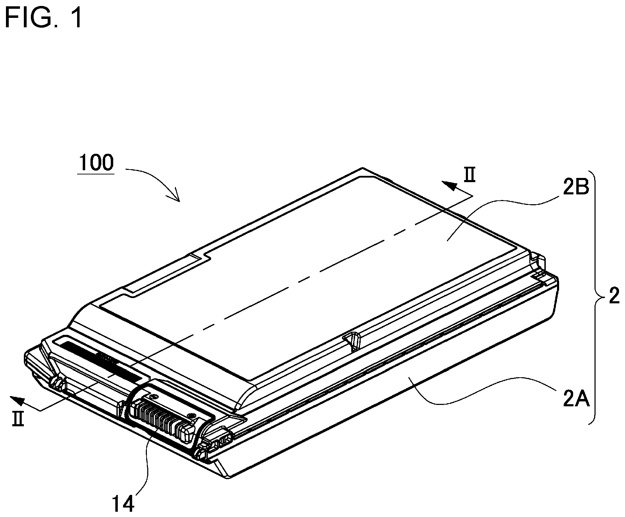

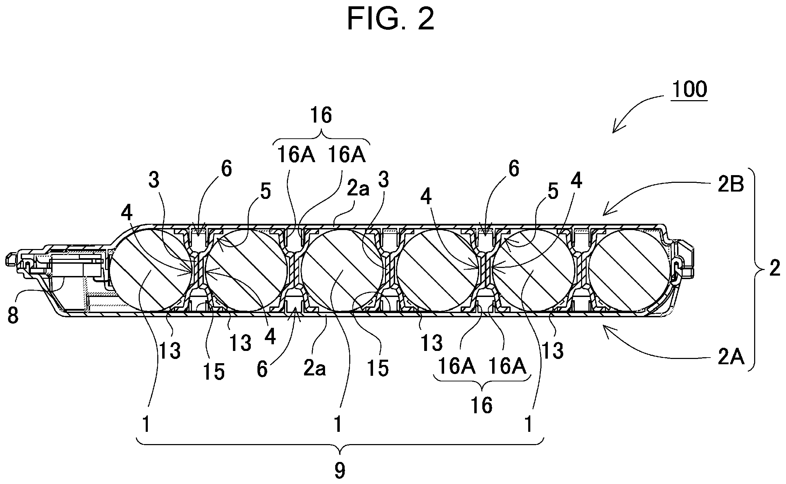

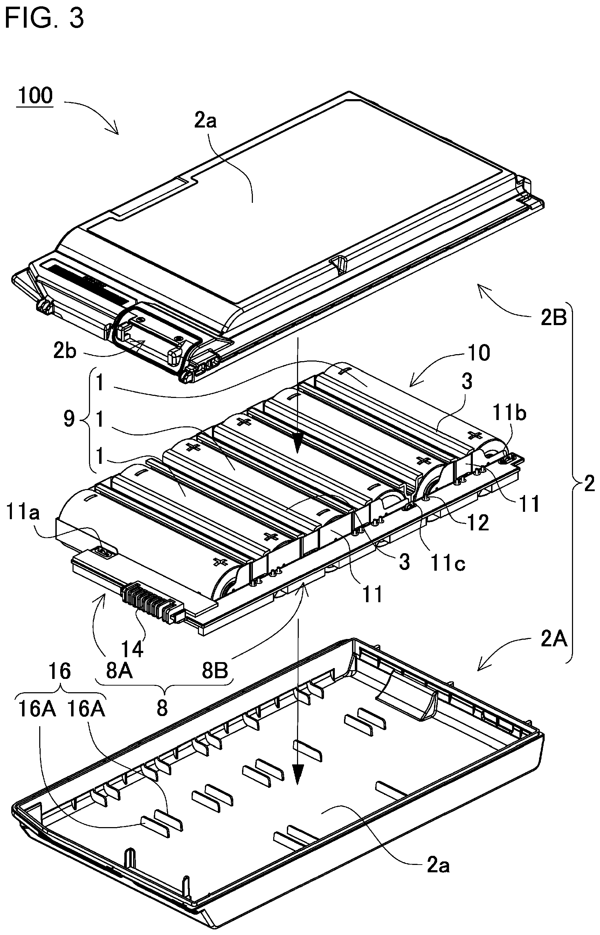

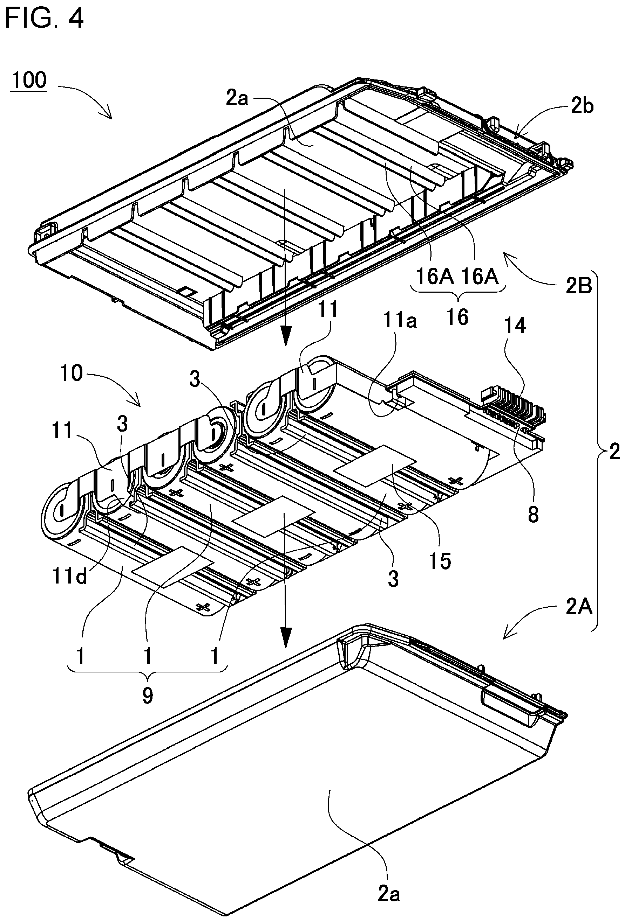

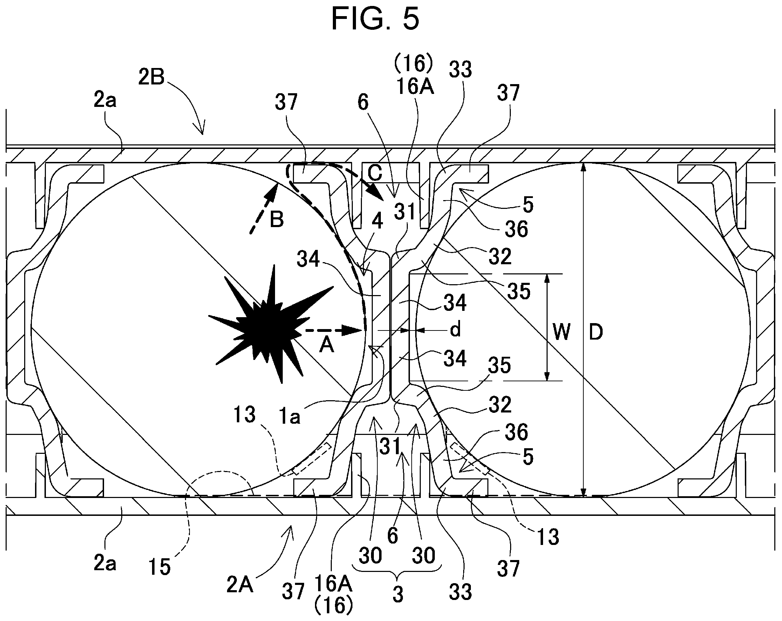

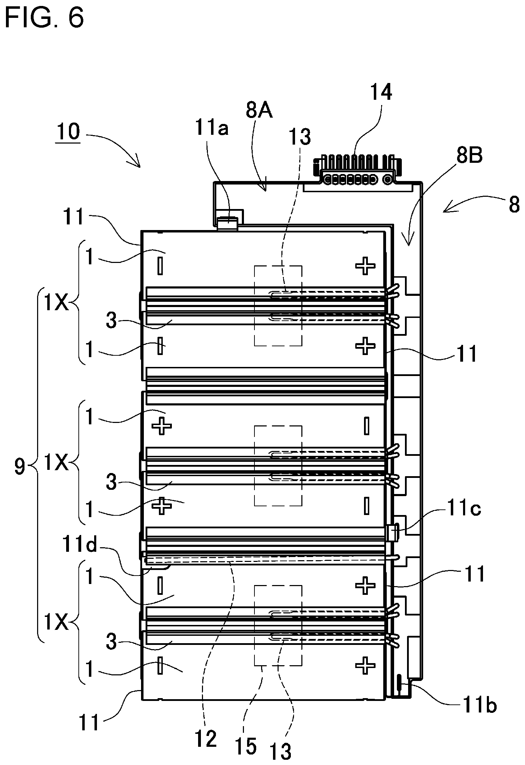

A battery pack according to an exemplary embodiment of the present invention is illustrated in FIGS. 1 to 6. FIG. 1 is a perspective view of battery pack 100. FIG. 2 is a cross-sectional view of battery pack 100 along line II-II illustrated in FIG. 1. FIG. 3 is an exploded perspective view of battery pack 100 illustrated in FIG. 1. FIG. 4 is an exploded perspective view of battery pack 100 illustrated in FIG. 1 from the bottom of battery pack 100. FIG. 5 is an enlarged cross-sectional view of battery pack 100 illustrated in FIG. 2. FIG. 6 is a bottom view of battery core pack 10 in which battery block 9 is coupled to a circuit board.

In battery pack 100, rechargeable battery cells 1 are housed. Battery cells 1 are connected in series or parallel to increase capacity and rechargeable. Battery pack 100 is connected to an external device serving as a driving target and battery cells 1 are electrically discharged to supply electric power. Presented herein is an example in which the external device connected to battery pack 100 is a laptop computer. The external device connected to the battery pack of the present invention is not limited to the laptop computer, but may be other electronic devices and electric devices, such as a cellular phone, a portable digital versatile disc (DVD) player, a portable car navigation system, and a portable music player, or an electric tool or an assisted bicycle, for example. Furthermore, the battery pack may be directly and detachably attached to the external device for use, or may be housed or embedded in the external device, or may be connected to the external device via a cable or the like.

Battery pack 100 illustrated in FIGS. 1 to 5 includes: rechargeable battery cells 1 having cylindrical shapes; an exterior case 2 housing battery cells 1 therein; and a heat resistant wall 3 disposed between battery cells 1 adjacent to each other. In battery pack 100, battery cells 1 are arranged in parallel to each other, heat resistant wall 3 is disposed between battery cells 1, and battery cells 1 and heat resistant wall 3 are housed in exterior case 2. Heat resistant wall 3 has heat insulating recess 4 in surfaces thereof facing surfaces of battery cells 1. Insulating recess 4 constitutes an air layer having a length (L) in the longitudinal direction of battery cell 1 and a width (W) in the circumferential direction of battery cell 1. In battery pack 100, heat resistant wall 3 disposed between battery cells 1 prevents the induction of thermal runaway between adjacent battery cells 1.

### Exterior Case 2

Battery pack 100 has a box shape substantially having a quadrangular shape in plan view as illustrated in FIG. 1. The main body with a box shape includes exterior case 2. Exterior case 2 is divided into two parts, namely, lower case 2A and upper case 2B, as illustrated in FIGS. 3 and 4. Exterior case 2 includes connector 14 configured to be connected to an electric device (herein, a laptop computer) as a driving target to which electric power is supplied using battery pack 100. Exterior case 2 may include a connection mechanism for connecting battery pack 100 to the electric device or a lock mechanism for maintaining an attached state of battery pack 100. Exterior case 2 is made of material having excellent electrical insulation and thermal insulation properties, for example, a resin such as polycarbonate.

As illustrated in FIGS. 2 to 5, battery cells 1, heat resistant wall 3 disposed between battery cells 1, and circuit board 8 are housed in exterior case 2. In battery pack 100 illustrated in the figures, battery cells 1 are arranged in parallel to each other and heat resistant wall 3 is disposed between battery cells 1, lead plates 11 are connected to end surface electrodes of battery cells 1 at both ends thereof to form battery block 9. Lead plates 11 of battery block 9 are connected to circuit board 8 to form battery core pack 10 connected to circuit board 8. Battery core pack 10 is housed in exterior case 2.

### Battery Cell 1

Battery cell 1 is a lithium-ion secondary battery. However, battery cell 1 may be a nonaqueous electrolyte secondary battery other than a lithium-ion secondary battery. Furthermore, battery cell 1 may be a rechargeable secondary battery such as a nickel-metal hydride battery or a nickel-cadmium battery, particularly a battery configured to generate high-temperature heat upon being used. As battery cell 1, a cylindrical battery including a cylindrical exterior can is used.

As illustrated in FIG. 6, battery cells 1 are arranged in parallel to one another, constituting battery block 9. In battery block 9 illustrated in the figure, six battery cells 1 having cylindrical shapes are arranged in six rows. In battery block 9, two battery cells 1 are lined with the same polarity direction, and end surfaces thereof are connected with lead plates 11 so that two battery cells are connected in parallel to form battery pair 1X, and also, three battery pairs 1X are lined with alternately opposite polarity directions and end surfaces thereof are connected with lead plates 11 so that adjacent battery pairs 1X are connected in series. Six battery cells 1 are thus connected so that three battery-cell pairs each including two battery cells connected in parallel are connected in series. In battery block 9 illustrated in the figure, six battery cells 1 are connected so that three battery-cell pairs each including two battery cells connected in parallel are connected in series, but the number of battery cells 1 and connection of battery cells 1 may be arbitrarily changed.

Battery cells 1 are electrically connected in series or parallel with lead plates 11. Lead plate 11 is formed by bending a metal plate having high conductivity. Lead plate 11 is welded to end surface electrodes of battery cells 1. The positive and negative outputs of battery block 9 are connected to circuit board 8 via output lead units 11a and 11b. A charge-and-discharge circuit and a protection circuit are mounted on circuit board 8. Furthermore, circuit board 8 is connected directly or via voltage detection line 12 to connection lead units 11c and 11d for intermediate potential measurement provided in lead plate 11 to detect the voltages of battery cells 1 and is also connected to temperature sensor 13 to detect the temperatures of battery cells 1. A thermistor or the like is used as temperature sensor 13. Connector 14 is directly connected onto circuit board 8 illustrated in the figure and is exposed to the outside from opening window 2b of exterior case 2, thereby being configured to connected to an external device.

### Heat Resistant Wall 3

Heat resistant wall 3 is disposed between battery cells 1 to reduce heat transfer between adjacent battery cells 1 and to prevent exhaust gas blown out from a side surface of battery cell 1 having thermal runaway from adversely affecting adjacent battery cell 1. When battery cell 1 having a cylindrical shape causes thermal runaway, exhaust gas is blown out not only from a gas valve provided in an end surface of battery cell, but also from a crack in the side surface of battery cell 1. In the battery pack having a structure in which battery cells 1 are arranged in parallel to each other, it is important to prevent exhaust gas blown out of the crack of the side surface during thermal runaway of battery cell 1 from inducing thermal runaway. In the battery pack according to the present invention, these problems are solved by disposing heat resistant wall 3 having a specific shape disposed between adjacent battery cells 1.

Heat resistant wall 3 is made of a material having high insulating and heat-resisting properties. Heat resistant wall 3 is preferably made of an inorganic material, for example, mica. Mica is highly fire-resistant and noncombustible, has high insulating properties, and is comparatively inexpensive, and is therefore suitable as a material required to have heat-resisting and insulating properties. Heat resistant wall 3 having high heat-resisting properties neither burn nor melt due to high-temperature exhaust gas or flame blown out from battery cell 1 and prevents the exhaust gas or flames from passing through the heat resistant wall and reaching adjacent battery cell 1. To reduce heat transfer between adjacent battery cells 1, heat resistant wall 3 further includes heat insulating recesses 4 on both sides of a center each facing the surface of a corresponding one of battery cells 1, heat insulating recesses 4 each forming an air layer having a length (L) in the longitudinal direction of battery cell 1 and a width (W) in the circumferential direction of battery cell 1. In heat resistant wall 3 disposed between battery cells 1, heat insulating recesses 4 form two air layers between adjacent battery cells 1, thereby reducing heat transfer between adjacent battery cells 1.

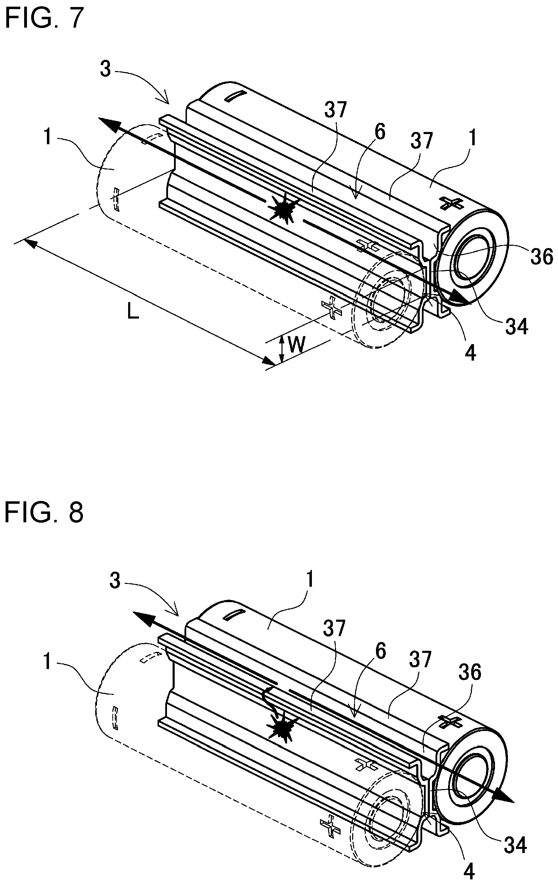

Furthermore, heat insulating recess 4 also functions as a discharge path for allowing high-temperature exhaust gas or flam blown out from the crack of the side surface of battery cell 1 to flow in a particular direction. If an abnormality in battery cell 1 causes exhaust flame, the flow direction of the flame is hardly predicted. Accordingly, when another battery cell 1 is present in the direction of the flow of the flame, there is the risk of propagation of thermal runaway due to the spread of a fire. Therefore, the discharge path is intentionally provided so that, even when exhaust flame occurs, unintended runaway of battery cell 1 may be almost prevented and the flow of the flame is controlled. In other words, the discharge path is provided inside battery pack 100 by heat resistant wall 3, thereby, even if exhaust flame occurs, guiding the exhaust flame to flow in a predetermined direction. Heat insulating recess 4 illustrated in FIG. 7 has a length (L) extending to both ends of battery cell 1 and is open at both ends of battery cell 1. As described above, heat insulating recess 4 has the length (L) extending to both ends of battery cell 1 and both ends of heat insulating recess 4 are open, so that high-temperature exhaust gas or flame discharged from the side surface of battery cell 1 to the air layer of heat insulating recess 4 as illustrated with arrow A shown in FIG. 5 are guided to flow from the surface of battery cell 1 to the outside via heat insulating recess 4 as illustrated with arrows in FIG. 7, thereby controlling the flow of the exhaust gas or flame, and thus, effectively preventing the induction of thermal runaway.

In heat insulating recess 4 illustrated in FIG. 5, the width (W) thereof is determined so as to include closest point 1a at which outer circumferential surfaces of paired battery cells 1 are closest to each other when viewed in the cross-section. In the state of being disposed between adjacent battery cells 1, heat resistant wall 3 surely guides closest point 1a at which the outer circumferential surfaces are closest to each other to heat insulating recess 4, thereby preventing heat transfer between adjacent battery cells 1 for the shortest distance. Furthermore, since the width (W) of heat insulating recess 4 is determined to include closest point 1a of battery cells 1, the air layers may be provided on both sides of closest point 1a. When a crack is generated in battery cell 1 at closest point 1a and both sides of closest point 1a, blown-out exhaust gas or flame are certainly guided to flow into heat insulating recess 4 to control the discharge direction of the exhaust gas or flame.

The width (W) of heat insulating recess 4 is 15% or more of the outer diameter (D) of battery cell 1, and may be preferably 20% or more thereof, and more preferably 25% or more thereof. The width (W) of heat insulating recess 4 is 60% or less of the outer diameter (D) of battery cell 1, and may be preferably 50% or less thereof, and more preferably 40% or less thereof.

### Heat Resistant Plate 30

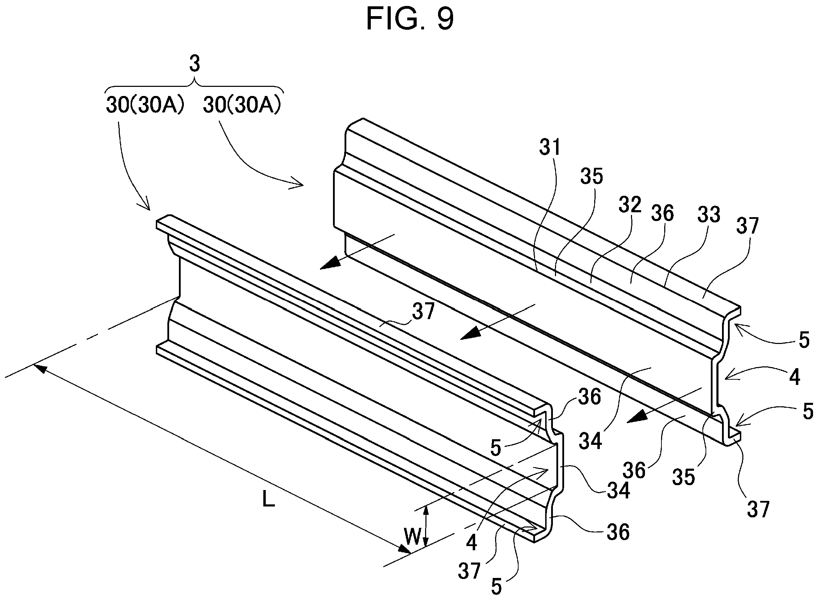

Heat resistant wall 3 illustrated in FIG. 5 is formed by stacking two heat resistant plates 30, as illustrated in FIG. 9. Two heat resistant plates 30 are joined to each other at centers thereof. Heat insulating recesses 4 are provided on both side surfaces of joined heat resistant plates 30. Heat resistant plate 30 is a plate having its shape not changed at a temperature of battery cell 1 having generated abnormal heat, and is preferably an inorganic plate, such as a mica plate. As the inorganic plate, a plate produced by sintering or molding inorganic powder into the form of a plate, a plate-shaped inorganic material, or a plate produced by molding inorganic fiber into the form of a plate can be used in place of a mica plate.

Heat resistant wall 3 composed of two heat resistant plates 30 includes outer grooves 5 along both sides of heat insulating recess 4, outer grooves 5 each having an opening disposed in the surface of battery cell 1, as illustrated in FIG. 5. In heat resistant plate 30 illustrated in the figure, bent pieces 37 are provided by bending both edges of heat resistant plate 30 toward the surface of battery cell 1, and outer groove 5 is provided between bent piece 37 and the surface of battery cell 1. In heat resistant plate 30, bent pieces 37 are formed by bending both the edges of heat resistant plate 30, whereby, on both sides of heat insulating recess 4, outer grooves 5 in two rows can be provided in the surface of battery cell 1. In heat resistant wall 3, heat insulating recess 4 is provided at the center thereof and outer groove 5 is provided on both sides of heat insulating recess 4, and accordingly, an air layer formed by heat insulating recess 4 is provided at the center of heat resistant wall 3 and air layers formed by outer grooves 5 are provided on both sides of heat insulating recess 4, so that the three air layers can be provided in a surface facing battery cell 1. In this structure, the three air layers results in the provision of a wide air layer in the cylindrically curved surface of battery cell 1 so that high-temperature exhaust gases or flames blown out from battery cell 1 flow into the air layer in a large region, whereby the induction of thermal runaway can be prevented.

In heat resistant wall 3, bent pieces 37 are provided at both edges of heat resistant plate 30, thereby causing both the upper and lower ends of heat resistant wall 3 to be closer to or to contact the inner surface of exterior case 2 in a large area, as illustrated in FIG. 5. This structure provides a larger creepage distance when high-temperature exhaust gas or flame blown out from battery cell 1 having caused thermal runaway flow toward adjacent battery cell 1. Thus, high-temperature exhaust gas or flame blown out from battery cell 1 is effectively prevented from passing between heat resistant wall 3 and exterior case 2 and reaching adjacent battery cell 1.

As illustrated in FIG. 5 and FIG. 6, heat resistant wall 3 allows outer groove 5 function as a housing space for housing temperature sensor 13 therein. This structure effectively prevents temperature sensor 13 disposed in outer groove 5 from getting loose and separating from the surface of battery cell 1. Thus, without conventionally fixing a temperature sensor to the surface of a battery cell by thermal coupling via an adhesive or the like having thermal conductivity, temperature sensor 13 is guided from the end side of bent piece 37 to outer groove 5 and simply disposed at a predetermined position and a temperature can be correctly detected. As indicated as broken lines in FIG. 5 and FIG. 6, temperature sensor 13 guided to outer groove 5 is held at the predetermined position by sticking fixing tape 15 over adjacent battery cells 1 in an area in which temperature sensor 13 is housed. Furthermore, as illustrated in FIG. 6, outer groove 5 of heat resistant wall 3 also functions as a housing space for housing voltage detection line 12 therein. In heat resistant wall 3, long bent piece 37 provides a large creepage distance. But excessively long bent piece 37 causes heat resistant plate 30 to be hardly bent, and narrows a gap between the end of bent piece 37 and the surface of battery cell 1, and as a result, temperature sensor 13, voltage detection line 12, and the like cannot be smoothly inserted. Therefore, in consideration of the above, in heat resistant wall 3, the length of bent piece 37 is determined such that the gap between the end edge of bent piece 37 and the surface of battery cell 1 is 1 mm or more, and preferably 2 mm or more.

Furthermore, in heat resistant wall 3, inner groove 6 is provided between both side portions of stacked heat resistant plates 30 and between outer grooves 5 provided on each side of heat resistant wall 3. In heat resistant wall 3 illustrated in FIG. 5, inner groove 6 is provided in a valley between cylindrically curved battery cells 1 disposed in parallel to each other. As illustrated in FIG. 2, while battery core pack 10 is housed in exterior case 2, an opening of inner groove 6 is closed by the inner surface of exterior case 2, so that a space between inner groove 6 and exterior case 2 functions as an air layer to perform heat-insulation between adjacent battery cells 1. Particularly in the valley between adjacent battery cells 1, air layers in three rows including air layers formed by outer grooves 5 in the surfaces of respective battery cells 1 and an air layer formed by inner groove 6 between light-side and left-side outer grooves 5 are provided, thereby providing a high heat insulation structure.

Furthermore, inner groove 6 also functions as a discharge path for causing, for example, high-temperature exhaust gas or flame blown out from a crack in the side surface of battery cell 1 to flow in a particular direction. When a crack is made in the side surface of battery cell 1 and high-temperature exhaust gas or flame is blown out as indicated with arrow A or B in FIG. 5, if the high-temperature exhaust gas or flame flowing toward adjacent battery cell 1 passes through upstream-side bent piece 37 as indicated with arrow C in FIG. 5, inner groove 6 disposed at the above-mentioned position allows the high-temperature exhaust gas or flame to be discharged to the outside through inner groove 6 serving as a discharge path, without passing through bent piece 37 opposite to upstream-side bent piece 37. In other words, the exhaust gas or flame blown out from the side surface of battery cell 1 and passing through upstream-side bent piece 37 is flown via inner groove 6 in the particular direction, thus controlling the flow of the exhaust gas or flame to effectively prevent the induction of thermal runaway to adjacent battery cell 1.

As illustrated in FIG. 5 and FIG. 9, the above-described heat resistant wall 3 has a predetermined cross-sectional shape such that two heat resistant plates 30 which are inorganic plates are bent to have a predetermined shape, and then stacked and joined. This structure in which two heat resistant plates 30 are stacked to form heat resistant wall 3 allows heat resistant wall 3 having an ideal complicated cross-sectional shape obtained by forming heat resistant plates 30 in different shapes to be efficiently mass-produced. Particularly, heat resistant plates 30 having the same shape are stacked and joined to each other, thereby allowing heat resistant wall 3 having a longitudinally and laterally symmetric cross-sectional shape to be efficiently mass-produced, thereby reducing manufacturing costs. Depending on the type of the inorganic plate, the inorganic plate may be formed by heating and compression molding an inorganic material together with a resin, a binder, and the like with a mold or the like to provide a predetermined shape. In the present specification, the above-mentioned formation is included in the bending process.

Each of heat resistant plates 30 constituting heat resistant wall 3 illustrated in FIG. 5 and FIG. 9 includes first bent portions 31, second bent portions 32, and third bent portions 33 all of which extend in the longitudinal direction of battery cell 1. First bent portions 31, second bent portions 32, and third bent portions 33 are arranged from the center toward both sides in this order in two rows. In heat resistant plate 30, center flat surface portion 34 is disposed between first bent portions 31 arranged in two rows at the center; rising portions 35 extending from both edges of center flat surface portion 34 toward the surface of battery cell 1 are each formed between first bent portion 31 and second bent portion 32; side flat surface portions 36 are each formed between second bent portion 32 and third bent portion 33; and bent pieces 37 are each formed between third bent portion 33 and the side edge of heat resistant plate 30. In heat resistant plate 30 illustrated in the figures, heat insulating recess 4 is demarcated by center flat surface portion 34 and rising portions 35 on both sides. Each of inner grooves 6 is demarcated by side flat surface portion 36 and rising portion 35. Each of outer grooves 5 is demarcated by side flat surface portion 36 and bent piece 37.

Heat insulating recess 4 demarcated by center flat surface portion 34 and rising portions 35 on both sides forms an air layer between center flat surface portion 34 and battery cell 1. The width (W) and depth of heat insulating recess 4 are determined so as to form the air layer between the surface of battery cell 1 disposed therein and center flat surface portion 34. Heat insulating recess 4 is formed so that the minimum gap (d) between the surface of battery cell 1 and center flat surface portion 34 is 5 mm or less. Furthermore, heat insulating recess 4 is preferably formed so that the closest point in the surface of battery cell 1 and center flat surface portion 34 are spaced to form a gap. The width (W) and depth of heat insulating recess 4 are determined so that the minimum gap (d) between the closest point in the surface of battery cell 1 and center flat surface portion 34 is 0.5 mm or more, and preferably 1 mm or more. The opening of heat insulating recess 4 is closed by the surface of battery cell 1 disposed therein. In heat resistant plate 30 illustrated in FIG. 5, the battery cell 1 side of second bent portion 32 is chamfered to form a contact portion contacting battery cell 1 into a slope so that second bent portion 32 contacts the surface of battery cell 1 in a large area. In each of first bent portions 31 illustrated in FIG. 5, rising portion 35 is provided by bending heat resistant plate 30 at an obtuse angle at each end of center flat surface portion 34. However, the first bent portion may also be formed by bending heat resistant plate 30 at a right angle or an acute angle.

Heat resistant wall 3 illustrated in FIG. 9 includes two mica plates 30A each bent at first bent portions 31, second bent portions 32, and third bent portions 33. Two mica plates 30A are stacked and joined to each other at respective center flat surface portions 34. Two mica plates 30A joined at respective center flat surface portions 34 include heat insulating recesses 4 formed on both sides. In a center region in which cylindrical battery cells 1 are closest to each other, two mica plates 30A having high heat resistance are stacked in two layers, thereby providing higher heat resistance. Two mica plates 30A are joined with an adhesive at their respective center flat surface portions 34 facing each other. Examples of the adhesive that can be used include an epoxy-based adhesive.

### Circuit Board 8

Circuit board 8 is bent to have a L-shape plan view, and is disposed along two sides of battery block 9 having a rectangular shape plan view, and is furthermore disposed along two sides of the peripheral wall of exterior case 2 having a box shape. L-shaped circuit board 8 includes first region 8A and second region 8B that are coupled perpendicularly to each other. First region 8A is disposed along one side surface of battery block 9 and also along the side surface of cylindrical battery cell 1. Second region 8B is disposed to face another side surface of battery block 9, that is, one end surface of cylindrical battery cells 1. In circuit board 8 illustrated in the figure, connector 14 for external connection is fixed to first region 8A, and second region 8B is connected to connection lead unit 11c for detecting the voltage of each battery pair 1X, voltage detection line 12 connected to connection lead unit 11d, and temperature sensor 13 for detecting the temperature of each battery cell 1. Furthermore, in circuit board 8, one end of first region 8A of L-shaped circuit board 8 is connected to one output lead unit 11a of lead plate 11 connected to battery block 9, and one end of second region 8B of L-shaped circuit board 8 is connected to output lead unit 11b of lead plate 11 connected to battery block 9.

### Positioning Rib

Exterior case 2 illustrated in FIGS. 2 to 5 includes surface plate unit 2a flush with the surfaces of battery cells 1 arranged in parallel to one another. Positioning rib 16 is provided on the inner side of surface plate unit 2a so that heat resistant wall 3 of battery core pack 10 housed in exterior case 2 is positioned at a predetermined position. Positioning rib 16 illustrated in FIG. 3 and FIG. 4 includes a pair of parallel ribs 16A arranged in parallel to each other. Paired parallel ribs 16A has a gap therebetween so that parallel ribs 16A can be guided into inner groove 6. The pair of parallel ribs 16A inserted to inner groove 6 position heat resistant wall 3 at the predetermined position in the inner surface of exterior case 2. The gap between the pair of parallel ribs 16A is adjusted such that, for example, the pair of parallel ribs 16A is press-fitted to the inner surface of inner groove 6, thereby, in a state that the pair of parallel ribs 16A is interposer into inner groove 6, fixing heat resistant wall 3 so as not to deviate from exterior case 2. However, the pair of parallel ribs 16A may have a gap therebetween so as to be smoothly inserted into the inside of inner groove 6.

As illustrated in FIG. 4, positioning rib 16 formed in the inner surface of upper case 2B has an overall length substantially equal to the length of heat resistant wall 3 and is configured to be inserted over almost the entirety of inner groove 6 formed in the upper part of heat resistant wall 3. Thus, the structure in which heat resistant wall 3 is connected via positioning rib 16 inserted over almost the entirety of inner groove 6, high-temperature exhaust gas or flame blown out from battery cell 1 can be surely prevented from passing between heat resistant wall 3 and exterior case 2. In contrast, as illustrated in FIG. 3, positioning rib 16 formed in the inner surface of lower case 2A has an overall length so as to be connected to a part of heat resistant wall 3. Thus, positioning rib 16 partially connected to heat resistant wall 3 is disposed at a position so as not to affect fixing tape 15 stuck on the surface of battery cell 1.

### INDUSTRIAL APPLICABILITY

A battery pack according to the present invention is suitably applicable to a rechargeable battery pack for battery-driven devices such as laptop computers, cellular phones, portable digital versatile disc (DVD) players, portable car navigation systems, portable music players, power tools, and assisted bicycles.

### REFERENCE MARKS IN THE DRAWINGS

- 100: battery pack
- 1: battery cell
- 1a: closest point
- 1X: battery pair
- 2: exterior case
- 2A: lower case
- 2B: upper case
- 2a: surface plate unit
- 2b: opening window
- 3: heat resistant wall
- 4: heat insulating recess
- 5: outer groove
- 6: inner groove
- 8: circuit board
- 8A: first region
- 8B: second region
- 9: battery block
- 10: core pack
- 11: lead plate
- 11a, 11b: output lead unit
- 11c, 11d: connection lead unit
- 12: voltage detection line
- 13: temperature sensor
- 14: connector
- 15: fixing tape
- 16: positioning rib
- 16A: parallel rib
- 30: heat resistant plate
- 30A: mica plate
- 31: first bent portion
- 32: second bent portion
- 33: third bent portion
- 34: center flat surface portion
- 35: rising portion
- 36: side flat surface portion
- 37: bent piece

## Claims

1. A battery pack (100) comprising:
battery cells (1) being rechargeable, the battery cells (1) having cylindrical shapes and arranged in parallel to each other;
a heat resistant wall (3) disposed between the battery cells (1); and
an exterior case (2) housing the battery cells (1) and the heat resistant wall (3) therein, wherein
the heat resistant wall (3) has heat insulating recesses (4) provided in surfaces of the heat resistant wall (3), each of the surfaces of the heat resistant wall (3) facing a surface of a corresponding one of the battery cells (1) and having a corresponding one of the heat resistant recesses (4) therein, the corresponding one of the heat insulating recesses (4) forming an air layer having a length (L) in a longitudinal direction of the corresponding one of the battery cells (1) and a width (W) in a circumferential direction of the corresponding one of the battery cells (1), and
the heat resistant wall (3) has a plurality of outer grooves (5) therein on both sides of the corresponding one of the heat insulating recesses (4), the plurality of outer grooves (5) have openings disposed on the surface of the corresponding one of the battery cells (1).

2. The battery pack (100) according to claim 1, wherein the corresponding one of the heat insulating recesses (4) with the length (L) extends across both ends of the corresponding one of the battery cells (1) and is open at the both ends of the corresponding one of the battery cells (1).

3. The battery pack (100) according to claim 1 or 2, wherein the corresponding one of the heat insulating recesses (4) with the width (W) includes a closest point at which peripheral surfaces of the battery cells (1) are closest to each other.

4. The battery pack (100) according to any one of claims 1 to 3, wherein the heat resistant wall (3) comprises two heat resistant plates (30) stacked on each other at respective centers of the two heat resistant plates (30) at which the heat insulating recesses (4) are provided therein.

5. The battery pack (100) according to claim 4, wherein each of the heat resistant plates (30) includes bent pieces (37) bent at both edges of the each of the heat resistant plates (30) toward the surface of the corresponding one of the battery cells (1), and each of the plurality of outer grooves (5) is disposed between a corresponding one of the bent pieces (37) and the surface of the corresponding one of the battery cells (1).

6. The battery pack (100) according to claim 4 or 5, wherein the heat resistant wall (3) has an inner groove (6) therein disposed between edge portions of the heat resistant plates (30) stacked on each other and between outer grooves (5) out of the plurality of outer grooves (5) provided on each side of the heat resistant wall (3), the inner groove (6) having an opening closed by an inner surface of the exterior case (2).

7. The battery pack (100) according to claim 6, wherein
the each of the heat resistant plates (30) includes first bent portions (31), second bent portions (32), and third bent portions (33),
the first bent portions (31), the second bent portions (32), and the third bent portions (33) extending in the longitudinal direction of the battery cells (1) and being arranged from the center toward both sides in an order of the first bent portions (31), the second bent portions (32), and the third bent portions (33) in two rows,
the each of the heat resistant plates (30) further includes:
a center flat surface portion (34) disposed at the center between the first bent portions (31) arranged in two rows;
rising portions (35) each formed between a corresponding one of the first bent portions (31) and a corresponding one of the second bent portions (32) and extending from a corresponding one of edges of the center flat surface portion (34) toward the surface of the corresponding one of the battery cells (1); and
side flat surface portions (36) each formed between the corresponding one of the second bent portions (32) and a corresponding one of the third bent portions (33),
each of the bent pieces (37) is formed between the corresponding one of the third bent portions (33) and a corresponding one of edges of the heat resistant plates (30),
each of the heat insulating recesses (4) is formed by the center flat surface portion (34) and the rising portions (35),
the inner groove (6) is formed by a corresponding one of the side flat surface portions (36) and a corresponding one of the rising portions (35), and
each of the outer grooves (5) is formed by a corresponding one of the side flat surface portions (36) and a corresponding one of the bent pieces (37).

8. The battery pack (100) according to any one of claims 4 to 7, wherein the heat resistant plates (30) are inorganic plates.

9. The battery pack (100) according to claim 8, wherein the inorganic plates are mica plates (30A) which are bent, are stacked on each other and joined at centers of the mica plates (30A).

10. The battery pack (100) according to claim 7, wherein
the heat resistant wall (3) includes two mica plates (30A) each bent at the first bent portions (31), the second bent portions (32), and the third bent portions (33), and
the mica plates (30A) are stacked on each other and joined at the center flat surface portion (34).

11. The battery pack (100) according to any one of claims 1 to 10, wherein the width (W) of the heat insulating recesses (4) is 15% or more of an outer diameter of the battery cells (1).

12. The battery pack (100) according to any one of claims 1 to 11, wherein the width (W) of the heat insulating recesses (4) is 60% or less of the outer diameter of the battery cells (1).

13. The battery pack (100) according to any one of claims 1 to 12, wherein, in each of the heat insulating recesses (4), a minimum gap (d) between the surface of the corresponding one of the battery cells (1) and the center flat surface portion (34) is 5 mm or less.

14. The battery pack (100) according to any one of claims 1 to 13, further comprising a temperature sensor (13) configured to detect a temperature of one of the battery cells (1), wherein
the temperature sensor (13) is disposed between the heat resistant wall (3) and the surface of the one of the battery cells (1).

15. The battery pack (100) according to any one of claims 1 to 7 and 10, further comprising
a temperature sensor (13) configured to detect a temperature of one of the battery cells (1), wherein
the temperature sensor (13) is disposed in one of the outer grooves (5).

16. The battery pack according to any one of claims 1 to 7 and 10, further comprising
a voltage detection line (12) connected to an end surface electrode of one of the battery cells (1) and configured to detect a voltage of the one of the battery cells (1), wherein
the voltage detection line (12) is disposed in one of the outer grooves (5).

17. The battery pack according to any one of claims 6, 7, and 10, wherein
the exterior case (2) includes a surface plate unit (2a) flush with surfaces of the battery cells (1) arranged in parallel to one another,
the surface plate unit (2a) includes a positioning rib (16, 16A) projecting toward an inner side of the surface plate unit (2a), and the positioning rib (16, 16a) is guided to one of the inner groove (6) to position the heat resistant wall (3) at a predetermined position of the exterior case (2).

## Patentansprüche

1. Batteriepack (100), umfassend:
Batteriezellen (1), die wiederaufladbar sind, wobei die Batteriezellen (1) zylindrische Formen aufweisen und parallel zueinander angeordnet sind;
eine wärmebeständige Wand (3), die zwischen den Batteriezellen (1) angeordnet ist; und
ein Außengehäuse (2), das die Batteriezellen (1) und die wärmebeständige Wand (3) darin aufnimmt, wobei
die wärmebeständige Wand (3) wärmedämmende Aussparungen (4) aufweist, die in Oberflächen der wärmebeständigen Wand (3) vorgesehen sind, wobei jede der Oberflächen der wärmebeständigen Wand (3) einer Oberfläche einer entsprechenden der Batteriezellen (1) zugewandt ist und eine entsprechende der wärmebeständigen Aussparungen (4) darin aufweist, wobei die entsprechende der wärmedämmenden Aussparungen (4) eine Luftschicht bildet, die eine Länge (L) in einer Längsrichtung der entsprechenden der Batteriezellen (1) und eine Breite (W) in einer Umfangsrichtung der entsprechenden der Batteriezellen (1) aufweist, und
die wärmebeständige Wand (3) eine Mehrzahl von äußeren Nuten (5) darin auf beiden Seiten der entsprechenden der wärmedämmenden Aussparungen (4) aufweist, wobei die Mehrzahl von äußeren Nuten (5) Öffnungen aufweist, die auf der Oberfläche der entsprechenden der Batteriezellen (1) angeordnet sind.

2. Batteriepack (100) nach Anspruch 1, wobei sich die entsprechende der wärmedämmenden Aussparungen (4) mit der Länge (L) über beide Enden der entsprechenden der Batteriezellen (1) erstreckt und an den beiden Enden der entsprechenden der Batteriezellen (1) offen ist.

3. Batteriepack (100) nach Anspruch 1 oder 2, wobei die entsprechende der wärmedämmenden Aussparungen (4) mit der Breite (W) einen nächstgelegenen Punkt umfasst, an dem Umfangsflächen der Batteriezellen (1) einander am nächsten sind.

4. Batteriepack (100) nach einem der Ansprüche 1 bis 3, wobei die wärmebeständige Wand (3) zwei wärmebeständige Platten (30) umfasst, die an jeweiligen Zentren der zwei wärmebeständigen Platten (30), an denen die wärmedämmenden Aussparungen (4) darin vorgesehen sind, aufeinander gestapelt sind.

5. Batteriepack (100) nach Anspruch 4, wobei jede der wärmebeständigen Platten (30) gebogene Laschen (37) umfasst, die an beiden Kanten der jeden der wärmebeständigen Platten (30) zur Oberfläche der entsprechenden der Batteriezellen (1) hin gebogen sind, und jede der Mehrzahl von äußeren Nuten (5) zwischen einem entsprechenden der gebogenen Laschen (37) und der Oberfläche der entsprechenden der Batteriezellen (1) angeordnet ist.

6. Batteriepack (100) nach Anspruch 4 oder 5, wobei die wärmebeständige Wand (3) eine innere Nut (6) darin aufweist, die zwischen Kantenabschnitten der wärmebeständigen Platten (30), die aufeinander gestapelt sind, und zwischen äußeren Nuten (5) aus der Mehrzahl von äußeren Nuten (5), die auf jeder Seite der wärmebeständigen Wand (3) vorgesehen sind, angeordnet ist, wobei die innere Nut (6) eine Öffnung aufweist, die durch eine innere Oberfläche des Außengehäuses (2) verschlossen ist.

7. Batteriepack (100) nach Anspruch 6, wobei
die jede der wärmebeständigen Platten (30) erste gebogene Abschnitte (31), zweite gebogene Abschnitte (32) und dritte gebogene Abschnitte (33) umfasst,
wobei die ersten gebogenen Abschnitte (31), die zweiten gebogenen Abschnitte (32) und die dritten gebogenen Abschnitte (33) sich in der Längsrichtung der Batteriezellen (1) erstrecken und vom Zentrum zu beiden Seiten in einer Reihenfolge der ersten gebogenen Abschnitte (31), der zweiten gebogenen Abschnitte (32) und der dritten gebogenen Abschnitte (33) in zwei Reihen angeordnet sind,
die jede der wärmebeständigen Platten (30) ferner umfasst:
einen zentralen flachen Oberflächenabschnitt (34), der im Zentrum zwischen den ersten gebogenen Abschnitten (31), die in zwei Reihen angeordnet sind, angeordnet ist;
ansteigende Abschnitte (35), die jeweils zwischen einem entsprechenden der ersten gebogenen Abschnitte (31) und einem entsprechenden der zweiten gebogenen Abschnitte (32) gebildet sind und sich von einem entsprechenden von Kanten des zentralen flachen Oberflächenabschnitts (34) zur Oberfläche der entsprechenden der Batteriezellen (1) erstrecken; und
seitliche flache Oberflächenabschnitte (36), die jeweils zwischen dem entsprechenden der zweiten gebogenen Abschnitte (32) und einem entsprechenden der dritten gebogenen Abschnitte (33) gebildet sind,
wobei jedes der gebogenen Laschen (37) zwischen dem entsprechenden der dritten gebogenen Abschnitte (33) und einer entsprechenden von Kanten der wärmebeständigen Platten (30) gebildet ist,
wobei jede der wärmedämmenden Aussparungen (4) durch den zentralen flachen Oberflächenabschnitt (34) und die ansteigenden Abschnitte (35) gebildet ist,
wobei die innere Nut (6) durch einen entsprechenden der seitlichen flachen Oberflächenabschnitte (36) und einen entsprechenden der ansteigenden Abschnitte (35) gebildet ist, und
wobei jede der äußeren Nuten (5) durch einen entsprechenden der seitlichen flachen Oberflächenabschnitte (36) und ein entsprechendes der gebogenen Laschen (37) gebildet ist.

8. Batteriepack (100) nach einem der Ansprüche 4 bis 7, wobei die wärmebeständigen Platten (30) anorganische Platten sind.

9. Batteriepack (100) nach Anspruch 8, wobei die anorganischen Platten Glimmerplatten (30A) sind, die gebogen sind, aufeinander gestapelt sind und an Zentren der Glimmerplatten (30A) verbunden sind.

10. Batteriepack (100) nach Anspruch 7, wobei
die wärmebeständige Wand (3) zwei Glimmerplatten (30A) umfasst, die jeweils an den ersten gebogenen Abschnitten (31), den zweiten gebogenen Abschnitten (32) und den dritten gebogenen Abschnitten (33) gebogen sind, und
die Glimmerplatten (30A) aufeinander gestapelt und am zentralen flachen Oberflächenabschnitt (34) verbunden sind.

11. Batteriepack (100) nach einem der Ansprüche 1 bis 10, wobei die Breite (W) der wärmedämmenden Aussparungen (4) 15 % oder mehr eines Außendurchmessers der Batteriezellen (1) beträgt.

12. Batteriepack (100) nach einem der Ansprüche 1 bis 11, wobei die Breite (W) der wärmedämmenden Aussparungen (4) 60 % oder weniger des Außendurchmessers der Batteriezellen (1) beträgt.

13. Batteriepack (100) nach einem der Ansprüche 1 bis 12, wobei in jeder der wärmedämmenden Aussparungen (4) ein minimaler Spalt (d) zwischen der Oberfläche der entsprechenden der Batteriezellen (1) und dem zentralen flachen Oberflächenabschnitt (34) 5 mm oder weniger beträgt.

14. Batteriepack (100) nach einem der Ansprüche 1 bis 13, ferner umfassend einen Temperatursensor (13), der konfiguriert ist, um eine Temperatur einer der Batteriezellen (1) zu erfassen, wobei
der Temperatursensor (13) zwischen der wärmebeständigen Wand (3) und der Oberfläche der einen der Batteriezellen (1) angeordnet ist.

15. Batteriepack (100) nach einem der Ansprüche 1 bis 7 und 10, ferner umfassend
einen Temperatursensor (13), der konfiguriert ist, um eine Temperatur einer der Batteriezellen (1) zu erfassen, wobei
der Temperatursensor (13) in einer der äußeren Nuten (5) angeordnet ist.

16. Batteriepack nach einem der Ansprüche 1 bis 7 und 10, ferner umfassend
eine Spannungserfassungsleitung (12), die mit einer Endoberflächenelektrode einer der Batteriezellen (1) verbunden und konfiguriert ist, um eine Spannung der einen der Batteriezellen (1) zu erfassen, wobei
die Spannungserfassungsleitung (12) in einer der äußeren Nuten (5) angeordnet ist.

17. Batteriepack nach einem der Ansprüche 6, 7 und 10, wobei
das Außengehäuse (2) eine Oberflächenplatteneinheit (2a) umfasst, die bündig mit Oberflächen der Batteriezellen (1), die parallel zueinander angeordnet sind, ist,
die Oberflächenplatteneinheit (2a) eine Positionierungsrippe (16, 16A) umfasst, die in Richtung einer Innenseite der Oberflächenplatteneinheit (2a) vorsteht, und die Positionierungsrippe (16, 16A) zu einer der inneren Nut (6) geführt wird, um die wärmebeständige Wand (3) an einer vorbestimmten Position des Außengehäuses (2) zu positionieren.

## Revendications

1. Bloc-batterie (100) comprenant :
des éléments de batterie (1) rechargeables, les éléments de batterie (1) ayant des formes cylindriques et étant agencés en parallèle les uns par rapport aux autres ;
une paroi résistante à la chaleur (3) disposée entre les éléments de batterie (1) ; et
un boîtier extérieur (2) logeant les éléments de batterie (1) et la paroi résistante à la chaleur (3) à l'intérieur de celui-ci, dans lequel
la paroi résistante à la chaleur (3) présente des évidements d'isolation thermique (4) prévus dans des surfaces de la paroi résistante à la chaleur (3), chacune des surfaces de la paroi résistante à la chaleur (3) faisant face à une surface d'un correspondant des éléments de batterie (1) et présentant un correspondant des évidements d'isolation thermique (4) à l'intérieur de celle-ci, le correspondant des évidements d'isolation thermique (4) formant une couche d'air ayant une longueur (L) dans une direction longitudinale du correspondant des éléments de batterie (1) et une largeur (W) dans une direction circonférentielle du correspondant des éléments de batterie (1), et
la paroi résistante à la chaleur (3) présente une pluralité de rainures extérieures (5) à l'intérieur de celle-ci sur les deux côtés du correspondant des évidements d'isolation thermique (4), la pluralité de rainures extérieures (5) présentant des ouvertures disposées sur la surface du correspondant des éléments de batterie (1).

2. Bloc-batterie (100) selon la revendication 1, dans lequel le correspondant des évidements d'isolation thermique (4) avec la longueur (L) s'étend à travers les deux extrémités du correspondant des éléments de batterie (1) et est ouvert aux deux extrémités du correspondant des éléments de batterie (1).

3. Bloc-batterie (100) selon la revendication 1 ou 2, dans lequel le correspondant des évidements d'isolation thermique (4) avec la largeur (W) inclut un point le plus proche auquel des surfaces périphériques des éléments de batterie (1) sont les plus proches les unes des autres.

4. Bloc-batterie (100) selon l'une quelconque des revendications 1 à 3, dans lequel la paroi résistante à la chaleur (3) comprend deux plaques résistantes à la chaleur (30) empilées l'une sur l'autre au niveau de centres respectifs des deux plaques résistantes à la chaleur (30) au niveau desquels les évidements d'isolation thermique (4) sont prévus à l'intérieur de celles-ci.

5. Bloc-batterie (100) selon la revendication 4, dans lequel chacune des plaques résistantes à la chaleur (30) inclut des pièces pliées (37) pliées au niveau des deux bords de la chacune des plaques résistantes à la chaleur (30) vers la surface du correspondant des éléments de batterie (1), et chacune de la pluralité de rainures extérieures (5) est disposée entre une correspondante des pièces pliées (37) et la surface du correspondant des éléments de batterie (1).

6. Bloc-batterie (100) selon la revendication 4 ou 5, dans lequel la paroi résistante à la chaleur (3) présente une rainure intérieure (6) à l'intérieur de celle-ci disposée entre des portions de bord des plaques résistantes à la chaleur (30) empilées l'une sur l'autre et entre des rainures extérieures (5) parmi la pluralité de rainures extérieures (5) prévues de chaque côté de la paroi résistante à la chaleur (3), la rainure intérieure (6) ayant une ouverture fermée par une surface intérieure du boîtier extérieur (2).

7. Bloc-batterie (100) selon la revendication 6, dans lequel
la chacune des plaques résistantes à la chaleur (30) inclut des premières portions pliées (31), des deuxièmes portions pliées (32) et des troisièmes portions pliées (33),
les premières portions pliées (31), les deuxièmes portions pliées (32) et les troisièmes portions pliées (33) s'étendant dans la direction longitudinale des éléments de batterie (1) et étant agencées depuis le centre vers les deux côtés dans un ordre des premières portions pliées (31), des deuxièmes portions pliées (32) et des troisièmes portions pliées (33) en deux rangées,
la chacune des plaques résistantes à la chaleur (30) inclut en outre :
une portion de surface plate centrale (34) disposée au centre entre les premières portions pliées (31) agencées en deux rangées ;
des portions montantes (35) chacune formée entre une correspondante des premières portions pliées (31) et une correspondante des deuxièmes portions pliées (32) et s'étendant depuis un correspondant des bords de la portion de surface plate centrale (34) vers la surface du correspondant des éléments de batterie (1) ; et
des portions de surface plate latérales (36) chacune formée entre la correspondante des deuxièmes portions pliées (32) et une correspondante des troisièmes portions pliées (33),
chacune des pièces pliées (37) est formée entre la correspondante des troisièmes portions pliées (33) et un correspondant des bords des plaques résistantes à la chaleur (30),
chacun des évidements d'isolation thermique (4) est formé par la portion de surface plate centrale (34) et les portions montantes (35),
la rainure intérieure (6) est formée par une correspondante des portions de surface plate latérales (36) et une correspondante des portions montantes (35), et
chacune des rainures extérieures (5) est formée par une correspondante des portions de surface plate latérales (36) et une correspondante des pièces pliées (37).

8. Bloc-batterie (100) selon l'une quelconque des revendications 4 à 7, dans lequel les plaques résistantes à la chaleur (30) sont des plaques inorganiques.

9. Bloc-batterie (100) selon la revendication 8, dans lequel les plaques inorganiques sont des plaques de mica (30A) qui sont pliées, sont empilées l'une sur l'autre et jointes aux centres des plaques de mica (30A).

10. Bloc-batterie (100) selon la revendication 7, dans lequel
la paroi résistante à la chaleur (3) inclut deux plaques de mica (30A) chacune pliée au niveau des premières portions pliées (31), des deuxièmes portions pliées (32) et des troisièmes portions pliées (33), et
les plaques de mica (30A) sont empilées l'une sur l'autre et jointes au niveau de la portion de surface plate centrale (34).

11. Bloc-batterie (100) selon l'une quelconque des revendications 1 à 10, dans lequel la largeur (W) des évidements d'isolation thermique (4) est égale ou supérieure à 15 % d'un diamètre extérieur des éléments de batterie (1).

12. Bloc-batterie (100) selon l'une quelconque des revendications 1 à 11, dans lequel la largeur (W) des évidements d'isolation thermique (4) est égale ou inférieure à 60 % du diamètre extérieur des éléments de batterie (1).

13. Bloc-batterie (100) selon l'une quelconque des revendications 1 à 12, dans lequel, dans chacun des évidements d'isolation thermique (4), un écart minimal (d) entre la surface du correspondant des éléments de batterie (1) et la portion de surface plate centrale (34) est égal ou inférieur à 5 mm.

14. Bloc-batterie (100) selon l'une quelconque des revendications 1 à 13, comprenant en outre un capteur de température (13) configuré pour détecter une température de l'un des éléments de batterie (1), dans lequel
le capteur de température (13) est disposé entre la paroi résistante à la chaleur (3) et la surface de l'un des éléments de batterie (1).

15. Bloc-batterie (100) selon l'une quelconque des revendications 1 à 7 et 10, comprenant en outre
un capteur de température (13) configuré pour détecter une température de l'un des éléments de batterie (1), dans lequel
le capteur de température (13) est disposé dans l'une des rainures extérieures (5).

16. Bloc-batterie selon l'une quelconque des revendications 1 à 7 et 10, comprenant en outre
une ligne de détection de tension (12) connectée à une électrode de surface d'extrémité de l'un des éléments de batterie (1) et configurée pour détecter une tension de l'un des éléments de batterie (1), dans lequel
la ligne de détection de tension (12) est disposée dans l'une des rainures extérieures (5).

17. Bloc-batterie selon l'une quelconque des revendications 6, 7 et 10, dans lequel
le boîtier extérieur (2) inclut une unité de plaque de surface (2a) au ras de surfaces des éléments de batterie (1) agencés en parallèle les uns par rapport aux autres,
l'unité de plaque de surface (2a) inclut une nervure de positionnement (16, 16A) faisant saillie vers un côté intérieur de l'unité de plaque de surface (2a), et la nervure de positionnement (16, 16A) est guidée vers l'une de la rainure intérieure (6) pour positionner la paroi résistante à la chaleur (3) à une position prédéterminée du boîtier extérieur (2).
